## Europäisches Patentamt
## European Patent Office
## Office européen des brevets

(19)

(11) Numéro de publication: **0 040 134**
**B1**

(12) 

# FASCICULE DE BREVET EUROPEEN

(45) Date de publication du fascicule du brevet:
**01.08.84**

(51) Int. Cl.³: **C 07 C 69/76, C 07 C 67/08**

(21) Numéro de dépôt: **81400698.7**

(22) Date de dépôt: **05.05.81**

(54) Composition à fonctions anhydride d'acide et son application en tant que réticulant de résines de polyester et/ou d'époxy.

(30) Priorité: **12.05.80 FR 8010557**

(43) Date de publication de la demande:
**18.11.81 Bulletin 81/46**

(45) Mention de la délivrance du brevet:
**01.08.84 Bulletin 84/31**

(84) Etats contractants désignés:
**BE CH DE GB IT LI LU NL**

(56) Documents cités:
**US - A - 3 182 074**

(73) Titulaire: **ATOCHEM, 12/16, allée des Vosges,
F-92400 Courbevoie (FR)**

(72) Inventeur: **Meyer, Jacques, 141 ter, rue de Saussure,
F-75017 Paris (FR)**
Inventeur: **Bernelin, Daniel, 12 Résidence de la
Theuillerie, F-91130 Ris-Orangis (FR)**

(74) Mandataire: **Rochet, Michel et al, ATOCHEM Service
PROPRIETE INDUSTRIELLE Tour Manhattan Cédex 21,
F-92091 Paris la Défense (FR)**

## Description

La présente invention concerne une nouvelle composition à fonctions anhydride d'acide et son application en tant que réticulant pour des résines. Plus particulièrement, elle concerne l'application de la nouvelle composition à fonctions anhydride d'acide en tant que réticulant de résine de polyester à prédominance de fonctions hydroxyle et/ou de résine d'époxyde.

L'emploi de peintures en poudre a tendance à se généraliser, aussi a-t-on proposé de mettre en œuvre, en tant que liant, différentes résines, le plus souvent associées à des réticulants. Toutefois, les revêtements obtenus à l'aide de ces peintures présentent certains inconvénients. C'est ainsi que les revêtements, dont les liants sont des polyesters saturés à terminaisons hydroxyle, réticulés par des éthers d'hexaméthylolmélamine, ont peu de tenue aux solvants et à l'exterieur et possèdent des propriétés mécaniques faibles. Ces mêmes polyesters, réticulés par les isocyanates, conduisent à des revêtements dont la tenue aux solvants est très faible, et de plus, si l'isocyanate est aromatique, le revêtement jaunit en présence de rayons ultraviolets. Si les liants sont des polyesters saturés à terminaisons acides, réticulés par des résines époxydes, les revêtements présentent un mauvais état de surface.

Dans les compositions pour peintures en poudre dont le réticulant est un anhydride ou un polyanhydride, on recherche essentiellement pour obtenir un aspect de surface régulier du feuil de peinture réticulé sur son support, à ce que les deux constituants du liant présentent, lors de l'élaboration de la peinture et de la mise en œuvre par fusion à chaud sur le support à revêtir et avant réticulation, des intervalles de température de ramollissement et des viscosités du même ordre de grandeur e bien entendu les plus faibles possibles, compatibles toutefois avec l'aptitude du liant initial ou de ses éléments à donner une poudre commercialement valable, c'est-à-dire ne présentant pas l'aptitude à se réagglomérer au stockage, ledit réticulant devant en plus présenter une réactivité élevée, ceci afin d'obtenir en un temps court de réticulation des propriétés mécaniques élevées du feuil réticulé de peinture.

Dans les demandes de brevets français publiées n° 2. 295. 990 et n° 2. 407. 909, la demanderesse a décrit des compositions contenant un dianhydride à fonctions ester obtenues par réaction de l'anhydride trimellitique (TMA) avec un diol dans un rapport molaire anhydride trimellitique/diol inférieur à deux et leur application en tant que réticulant dans des compositions pour peinture en poudre comprenant une résine de polyester saturé à fonctions hydroxyle ou une résine d'époxy.

La demanderesse a maintenant trouvé de nouvelles compositions à fonctions anhydride utilisables en tant que réticulants pour des résines de polyester hydroxylé et/ou des résines d'époxy permettant, par rapport aux compositions de réticulants connus à fonctions anhydride, d'obtenir des compositions de peinture de faible viscosité à l'état fondu, lesdites peintures présentant une réactivité élevée, acceptant un taux élevé de charges et de pigments et fournissant un aspect de surface du feuil réticulé de brillance comparativement plus élevé.

La présente invention concerne donc une nouvelle composition à fonctions anhydride d'acide, caractérisée en ce qu'elle est obtenue par réaction sous chauffage d'anhydride trimellitique avec un mélange d'un ou plusieurs diols et d'un ou plusieurs polyols de fonctionnalités supérieures à deux, ou avec un ou plusieurs polyols de fonctionnalités supérieures à deux.

La présente invention concerne également un procédé d'obtention desdites compositions à fonctions anhydride d'acide et des compositions pour liants de peinture en poudre contenant lesdites compositions et au moins une résine saturée réticulable choisie parmi des résines de polyester saturé à fonctions hydroxyle et/ou des résines d'époxyde.

Elle concerne également l'application desdits liants pour peinture à la fabrication de feuils réticulés de peinture.

Les compositions à fonctions anhydride selon l'invention permettent, lors du mélange par fusion avec lesdites résines, d'obtenir un mélange homogène fournissant sur le feuil réticulé de peinture des propriétés mécaniques constantes et reproductibles, pour des durées de cuisson courtes. De même elles permettent d'obtenir, par réticulation à des températures allant jusqu'à 280 °C des revêtements qui présentent une excellente tenue aux solvants, au vieillissement à l'extérieur et aux rayonnements, et un aspect de surface très satisfaisant, et une brillance comparativement plus élevée pour un taux de charge supérieur.

Selon l'invention, les nouvelles compositions à fonctions anhydride d'acide sont préparées par réaction sous chauffage d'anhydride trimellitique avec un mélange d'un ou plusieurs diols, et d'un ou plusieurs polyols de fonctionnalités supérieures à deux. En tant que diol utilisé dans l'invention, on met en œuvre un diol aliphatique ou cyclo aliphatique à chaîne droite ou ramifiée contenant de 2 à 10 atomes de carbone tels que par exemple l'éthylène glycol, le propylène glycol, le diéthylène glycol, le dipropylène glycol, le néopentyl glycol, le cyclohexane diméthanol, utilisés seuls ou en mélange de deux ou plusieurs d'entre eux. En tant que polyol de fonctionnalité supérieure à deux, on utilise à titre d'exemple des polyols tels que le glycérol, le triméthilolpropane, le trihydroxyéthylisocyanurate, le pentaérythritol, le sorbitol, etc. ..., utilisés seuls ou en mélange de deux ou plusieurs d'entre eux.

Le rapport molaire diol/polyol de la partie hydroxylée entrant en réaction avec l'anhydride trimellitique peut être compris entre 0 et 100, de préférence entre 0 et 10. Le rapport molaire de l'anhydride trimellitique au diol et au polyol ou au polyol utilisés pour la réaction de fabrication de la nouvelle composition est tel que l'on reste dans les limites permises par la loi de Flory en fonction du degré d'avancement de la réaction et du taux de ramification afin de ne pas aboutir à une gélification prématurée de la composition lors de sa préparation – voir à ce sujet Turner Alfrey – Mechanical Behavior of High-Polymers – Interscience Publishers – Volume VI, page 268. Il y a lieu également de tenir compte des réactions parasites possibles qui modifieraient les fonctionnalités des réactifs hydroxylés.

C'est ainsi que dans le cas du glycérol, et pour un rapport molaire diol/triol de zéro, il est possible d'aboutir à une composition à fonctions anhydride d'acide qui soit fusible pour un rapport molaire TMA/glycérol de 3, avec un indice d'acide en milieu aqueux de 522 et un indice d'acide en milieu alcoolique de 328.

Le cas échéant, une fraction de l'anhydride trimellitique peut être remplacée par un acide ou un anhydride dicarboxylique.

La réaction de préparation de la nouvelle composition à fonctions anhydride s'effectue à une température généralement comprise entre 180 et 300 °C, de préférence entre 220 et 280 °C, de jusqu'à ce qu'il n'y ait plus de dégagement d'eau ou plus précisément jusqu'à ce que l'on obtienne le titre en fonctions anhydride recherché, lequel est exprimé par la différence entre l'indice d'acide en milieu aqueux et l'indice d'acide en milieu alcoolique de la masse réactionnelle. Habituellement, la durée de réaction est comprise entre 4 et 6 heures dans l'intervalle de température indiqué. Le cas échéant, l'eau formée par anhydrisation au cours de la réaction peut être entraînee au moyen d'un débit de gaz inerte tel que l'azote, par azéotropie ou par mise sous vide. Les réactifs sont généralement introduits conjointement en début de réaction ou bien ils peuvent être introduits séparément. C'est ainsi que le polyol peut être introduit au cours de la réaction entre l'anhydride trimellitique et le diol. Dans une autre variante, l'anhydride trimellitique est tout d'abord fondu dans le réacteur à 210 °C puis on y introduit progressivement le diol et le polyol. Selon cette variante, on constate un effet exothermique lors de l'introduction des réactifs hydroxylés. Après quoi, en fin de réaction, le produit final est coulé, refroidi et broyé.

Sans vouloir se relier à une théorie, on pense que lors du mélange des réactifs, la première réaction impliquée est la destruction par ouverture des fonctions anhydride du TMA par les fonctions hydroxyle du diol et du polyol por fournir des unités monomères à fonctions ester et acide carboxylique, réaction suivie, le cas échéant, d'une estérification des fonctions hydroxyle en excès par rapport aux fonctions anhydride selon le rapport molaire TMA/ polyol + diol utilisé. Ensuite il se produit des anhydrisations des unités monomères et entre les unités monomères, anhydrisations positionnées différemment de celle de l'anhydride trimellitique de départ. Ceci peut être confirmé par les différences entre les indices d'acide en milieu aqueux et alcoolique. C'est ainsi que dès la fin de la première réaction indiquée ci-dessus, la différence des indices est nulle ce qui implique l'absence de fonctions anhydride. Au fur et à mesure de l'avancement de la réaction et du départ de l'eau, il se produit au cours du temps une différence des indices laquelle augmente en fonction du temps ce qui est représentatif de la formation de fonctions anhydride.

Les compositions à fonctions anhydride obtenues présentent des intervalles de température de ramollissement compris entre 60 et 150 °C, de préférence entre 80 et 110 °C, selon la methode bille et anneau, et des indices d'acide en milieu aqueux et alcoolique variables selon les rapports molaires utilisés et le degré d'avancement de la réaction d'anhydrisation. C'est ainsi, qu'à titre d'exemple pour le produit de réaction de 2 moles de TMA, 0,7 mole d'éthylène glycol et 0,2 mole de glycérol, on obtient aisément un indice d'acide aqueux de 540 et un indice d'acide alcoolique de 310.

Les nouvelles compositions à fonctions anhydride de la présente invention, trouvent application en tant que réticulants dans des compositions pour liants de peinture en poudre, associées avec des résines saturées réticulables de polyesters hydroxylés et/ou des résines d'époxyde.

Les résines de polyester saturé réticulable utilisables conjointement avec lesdites compositions à fonctions anhydride sont des produits solides présentant un intervalle de température de ramollissement compris entre 60 et 130 °C, de préférence entre 70 et 100 °C, selon la méthode bille et anneau, un indice d'hydroxyle compris entre 100 et 200 et un indice d'acide le plus faible possible, de préférence inférieure à 10.

La résine de polyester mise en œuvre est préparée de façon en soi connue, par réaction d'un acide dicarboxylique aromatique ou d'un ester d'alkyle inférieur d'acide dicarboxylique aromatique avec un diol, en proportions théoriques suivant l'indice d'hydroxyle à obtenir.

Les acides dicarboxyliques aromatiques sont représentés plus particulièrement par les acides téréphtalique, isophtalique employés seuls ou en mélange entre eux, ou avec des acides dicarboxyliques aliphatiques saturés, tels que les acides adipique, succinique ou sébacique.

En outre, pour augmenter le nombre des ramifications dans le polyester, il est possible d'associer aux acides dicarboxyliques des acides à plus de deux fonctions carboxyliques aromatiques ou aliphatiques, parmi lesquels on peut citer l'acide et l'anhydride trimellitique, l'acide et l'anhydride pyromellitique, l'acide butanetétracarboxylique.

Parmi les diols à mettre en œuvre pour obtenir le polyester, sont à mentionner: l'éthylène glycol, le diéthyléne glycol, le propylène glycol, le dipropylène glycol, les butanediols, le bishydroxyéthylbisphénol A, le néopentyl glycol, le bisphénol A hydrogéné. Ces diols sont employés seuls ou en mélange entre eux avec d'autres diols.

Afin d'augmenter le nombre des ramifications, ainsi que le nombre de groupes terminaux hydroxyle du polyester, il est recommandé d'associer aux diols des triols, tels que le glycérol, le triméthylolpropane, le trihydroxyéthylisocyanurate, le pentaérythritol, le sorbitol.

Il est bien évident que, pour éviter la réticulation du polyester, lors de sa préparation, la mise en

œuvre de produits possédant plus de deux fonctions acide ou plus de deux fonctions alcoolique ne peut se faire que dans les limites données par la loi de Flory (Turner Alfrey, Mechanical Behavior of High Polymers, Interscience Publishers, volume VI, page 268).

Comme polyester on peut également mettre en œuvre un polyester obtenu par réaction de polytéréphtalate d'éthylène glycol de haut poids moléculaire en granulés, films, fibres, etc. . . . avec un triol tel que glycérol, triméthylolpropane, trihydroxyéthylisocyanurate.

Dans une autre variante, les compositions de l'invention conjointement au réticulant contiennent une résine saturée d'époxyde qui sont des produits connus de condensation d'un diphénol tel que le 2,2-(4-hydroxyphényl)-propane et d'une épihalohydrine telle que l'épichlorhydrine, le rapport molaire de l'épichlorhydrine ou diphénol étant en général compris entre 1,2 et 1,5 et qui sont préparées selon des procédés connus. Les résines époxyde utilisées dans les compositions de l'invention sont des masses solides dont le point de fusion mesuré selon la méthode bille et anneau est compris entre 60 et 130 °C, de préférence entre 80 et 110 °C, et dont l'indice d'époxy est compris entre 400 et 1500, de préférence entre 500 et 1000. Ces produits sont connus dans le commerce.

A titre indicatif et non limitatif, des résines représentatives sont les résines d'époxyde d'équivalent époxy compris entre 850 et 950 tel que décrit par S.T. Harris – The Technology of powder coatings – Portcullis Press Londres – 1976 – Pages 16 et 17, comme par exemple les résines vendues commercialement par la Société CIBA GEIGY sous la dénomination Araldite 7004, la résine DER 664 U vendue par la Société DOW et la résine vendue sous la dénomination EPIKOTE 1004 par la Société Shell Chemical.

Dans une autre variante encore, les compositions de liants de peinture de l'invention contiennent, outre le réticulant, un mélange de résine de polyester saturé à fonctions hydroxyle et une résine d'époxy afin d'obtenir sur le feuil de peinture les propriétés inhérentes aux deux familles de résines précitées.

Les compositions pour liant de peinture en poudre de l'invention sont réticulables par polyaddition et polycondensation à des températures comprises entre 140 et 280 °C, pendant des temps allant de 2 à 40 minutes.

Dans les peintures en poudre dont le liant est une composition selon l'invention, la résine saturée et la nouvelle composition à fonctions anhydride sont présentes en quantités respectives telles que le rapport des fonctions anhydride aux fonctions réactives de la ou des résines soit compris entre 1 et 1,7, de préférence entre 1,1 et 1,5.

Les peintures en poudre contiennent, outre les liant ci-dessus mentionnés, des agents d'étalement en quantité comprise entre 0,1 et 3% en poids de composition, tels que des polymères acryliques, des additifs connus dans l'industrie des peintures tels que des pigments, des colorants, des charges. De même, elles peuvent contenir des agents permettant des propriétés mécaniques élevées pour des cadences industrielles plus rapides comme enseigné dans les demandes de brevets français n° 2 401 205 et n° 2 432 541.

On préparé les peintures en poudre selon l'invention en mélangeant simplement les constituants selon un ordre ou des combinaisons quelconques. Par exemple, on peut mélanger au préalable la résine et le réticulant par une opération de fusion à une température inférieure en général à 120 °C, de préférence inférieure à 100 °C, pendant un temps court, au moyen d'un mélangeur interne, d'une extrudeuse ou d'un appareil du genre Büss, puis refroidir et concasser le liant, ensuite y incorporer les adjuvants dans une opération de mélange à sec, puis pratiquer une nouvelle opération de mélange par fusion comme précédemment. De même on peut associer divers constituants les uns aux autres préalablement à l'opération finale de mélange par fusion. Il est en général préférable de mélanger à sec tous les constituants solides conjointement puis d'homogénéiser par fusion des constituants organiques. Le produit résultant de la fusion est ensuite concassé, broyé et tamisé à une dimension de particules n'excédant pas en général 100 microns. On applique les mélanges ainsi obtenus selon des procédés connus tels que le lit fluide, la puvérisation électrostatique sur des matériaux thermiquement résistants, préalablement dégraissés, tels que des pièces métalliques ou céramiques, puis on procède à la réticulation à des températures de 140 à 280 °C pendant 2 à 40 minutes. L'épaisseur moyenne du revêtement obtenu sur le support est généralement comprise entre 30 et 120 microns.

Les compositions de l'invention permettent d'obtenir des revêtements présentant des propriétés mécaniques élevées telles que la résistance au choc, à la pliure, de même que des propriétés chimiques élevées telles que la résistance aux solvants.

Les peintures en poudre dont le liant est une composition selon l'invention trouvent leur application dans l'industrie de l'automobile, du batiment, de la machine agricole en tant que revêtements de surfaces métalliques.

Les exemples suivants sont donnés à titre illustratif et non limitatif de la mise en œuvre de l'invention, les parties étant exprimées en poids sauf indication contraire.

Les revêtements présentent les caractéristiques suivantes;

– Epaisseur: 40 à 100 μm

– Aspect de surface: bonne tension de surface; surface brillante, mate ou satinée selon l'effet recherché

– Tenue à la méthyléthylcétone: (une goutte de méthyléthylcétone est déposée sur le revêtement, puis on frotte à cet endroit avec l'ongle, le temps nécessaire pour enlever le revêtement): temps de tenue exprimé en minutes

– Viellissement accéléré: (exposition dans un xenotest et notation du début de jaunissement): supérieure à 2500 heures

– Emboutissage: (norme française T 30 019)

– Résistance au choc: (norme française T 30 039 pour une masse de 1 kg tombant de 100 cm)

– Pliage: (norme ASTM D 522-60) pliage sur mandrin conique d'une plaque.·

Les compositions de l'invention sont des liants de peintures particulièrement appropriés dans les industries de l'automobie, de l'électro-ménager, de la machine agricole, de la plomberie.

Exemple 1:

Préparation de nouvelle compositions à fonctions anhydride d'acide

1. On fait réagir à 240 °C pendant six heures sous atmosphère d'azote:

| | |
|---|---|
| – Anhydride trimellique: 2 moles | 384 |
| – Ethylène glycol: 0,7 mole | 43,4 g |
| Glycérol: 0,2 mole | 18,4 g |

Après la fin de la réaction, le produit est coulé, refroidi et broyé. Il présente les caractéristiques suivantes:

| | |
|---|---|
| – Indice d'acide aqueux | 540 |
| – Indice d'acide alcoo lique | 310 |
| – Point de fusion (bille et anneau) | 84 °C |

2. On place dans un réacteur 576 g (3 moles) d'anhydride trimellitique que l'on chauffe à fusion à 210 °C. On y ajoute ensuite sous atmosphère d'azote 92 g (1 mole) de glycérol. Il se produit une exothermicité. Ensuite la masse réactionnelle est portée à 230 °C et mise à réagir pendant 6 heures.

Après la fin de la réaction, le produit est coulé, refroidi et broyé. Il présente les caractéristiques suivantes:

| | |
|---|---|
| – Indice d'acide aqueux | 522 |
| – Indice d'acide alcoolique | 328 |
| – Point de fusion (bille et anneau) | 120 °C |

3. On prépare de la même façon que ci-dessus en 2/ un produit à fonctions anhydride d'acide par réaction de 576 g (3 moles) d'anhydride trimellitique et 261 g (1 mole) de trihydroxyéthylisocyanurate. Toutefois la réaction se réalise à 270 °C pendant 5 heures. Le produit final obtenu les caractéristiques suivantes:

| | |
|---|---|
| – Indice d'acide aqueux | 402 |
| – Indice d'acide alcoolique | 234 |
| – Point de fusion (bille et anneau) | 140 °C |

4. On prépare une composition selon l'invention par réaction de 2 moles (384 g) d'anhydride trimellitique, de 0,7 mole (43,4 g) d'éthylène glycol et de 0,15 mole (20,40 g) de pentaérytritol.

On mélange tout d'abord à froid l'anhydride trimellitique et le pentaérythritol, puis on chauffe à 230 °C. Il se produit une exothermicité et le mélange devient fluide. Ensuite on y ajoute l'éthylène glycol et on poursuit la réaction à la même température pendant 6 heures. Le produit est coulé, refroidi et broyé.

Il présente les caractéristiques suivantes:

| | |
|---|---|
| – Indice d'acide en milieu aqueux | 553 |
| – Indice d'acide en milieu alcoolique | 309 |
| – Point de fusion (bille et anneau) | 88 °C |

Les produits précédents sont mis en œuvre en tant que réticulants dans les exemples 3 et 4.

Exemple comparatif 1

Préparation d'une composition à fonctions anhydride selon le brevet français 2 295 990

On fait réagir dans les mêmes conditions que dans l'exemple 1 ci-dessus:

| | | |
|---|---|---|
| – Anhydride trimellitique: | 2 moles | 384 g |
| – Ethylene glycol: | 1 mole | 62 g |

On obtient un produit solide présentant les caractéristiques suivantes:

| | |
|---|---|
| – Indice d'acide en milieu aqueux | 540 |
| – Indice d'acide en milieu alcoolique | 321 |
| – Point de fusion (bille et anneau) | 78 °C |

Exemple 2

Préparation d'une résine de polyester saturé

On fait réagir à 220 °C pendant 10 heures sous atmosphère d'azote:

| | |
|---|---|
| – Acide téréphtalique | 1 mole |
| – Propylène glycol | 0,8 mole |
| – Néopentyl glycol | 0,35 mole |
| – Pentaérytritol | 0,15 mole |

Après la fin de la réaction, le produit est coulé, refroidi et broyé.

Les caractéristiques du produit obtenu sont les suivantes:

| | |
|---|---|
| – Indice d'acide | 5 |
| – Indice d'hydroxyle | 180 |
| Point de fusion (bille et anneau) | 80 °C |

Cette résine hydroxylée sert à préparer les compositions pour peinture des exemples suivants.

Exemple 3

Compositions pour peinture

On prépare quatre formulation pour peinture en poudre A, B, C, D, les formulations A et C étant des compositions témoin, selon les recettes suivantes du tableau I.

Tableau I
Compositions
pour peinture
Constituants
en parties
en poids

| Constituants en parties en poids | A | B | C | D |
|---|---|---|---|---|
| Résine polyester de l'exemple 2 | 100 | 100 | 100 | 100 |
| Composition de polyanhydride témoin (exemple comparatif 1) | 30 | – | 42 | – |
| Compositions de polyanhydride de l'invention (de l'exemple I-1 | – | 30 | – | 42 |
| Oxyde de titane rutile (1) | 56 | 56 | 60 | 60 |
| Agent d'étalement (2) | 2 | 2 | 2 | 2 |
| Oxyde de zinc (3) | 1 | 1 | 1 | 1 |

(1) Marque commerciale KRONOS CL 220 vendu par la Société Industrielle du Titane
(2) Acronal 4 F vendu par la Société BASF
(3) Qualité neige Codex

Il est à remarquer que les rapports pondéraux de la résine et des réticulants des compositions A et B correspondent sensiblement au rapport stoechiométrique des fonctions réactives.

Pour préparer une composition pour peinture en poudre, on procède de la façon suivante:

On réalise un mélange intime des composants pulvérulents, puis on extrude le mélange sur un mélangeur Büss à un mélangeur à une température de 100 °C. Le mélange est refroidit, broyé finement, puis tamisé à l'aide d'un tamis d'ouverture de maille 100 microns.

La poudre résultante est appliquée l'aide d'un pistolet électrostatique (marque SAMES) sur une plaque d'acier (dégraissée au préalable) de dimensions 20 cm × 10 cm × 0,08 cm. Cette plaque est ensuite étuvée à 200 °C pendant un temps de 12 minutes.

Après refroidissement, on mesure les propriétés des feuils de peinture. Elles sont reportées dans le tableau II.

De même on apprécie la réactivité des peintures en poudre en enregistrant sur un spectromètre mécanique opérant par cissailement (tel que l'appareil de Rheometrics Inc. – Modèle RMF 7220) et fonctionnant en enceinte isotherme à 200 °C un diagramme G' (dyne/cm$^2$) en fonction du temps (en minutes) qui exprime le comportement rhéologique d'un système résine/réticulant, G' étant le module élastique du système. La pente dG'/dt de la partie rectiligne de la courbe enregistrée pour une peinture en poudre exprime sa vitesse de réticulation. Voir à ce sujet M.J. Hannon, D. Rhum et K.F. Wissbrun-Journal of Coating Technology, volume 48 n° 621 – Octobre 1976 – pages 54.

Dans le tableau II, les rapports $\frac{dG'}{dt}$ des courbes obtenues sur les différentes peintures A, B, C, D sont également représentées.

Tableau II

| Caractéristique | dG'/dt dynes/ cm$^2$/mn | Epaisseur en microns | Emboutissage Erichsen NFT30 019 | Choc NFT 30 039 kgcm | Pliage sur mandrin ASTM D 522-60 | Tenue à la méthyl-éthyl-cétone |
|---|---|---|---|---|---|---|
| formule A | 0,8.10$^5$ | 60 | 1 mm | 0 | $\varnothing > 38$ mm | 15 sec |
| formule B | 10$^5$ | 60 | 6,8 mm | 50 | $\varnothing > 3$ mm | 3 mn |
| formule C | 10$^5$ | 60 | 8 | 40 | $\varnothing < 3$ mm > | 3mn |
| formule D | 1,6.10$^5$ | 60 | 8 mm | 100 | $\varnothing < 3$mm > | 3 mn |

L'examen du tableau précédent montre les points suivants:

a) A formulation de peinture équivalente, les nouveaux réticulants de l'invention (des formules B et D) sont plus réactifs vis-à-vis d'une même résine que les réticulants connus.

b) A la stoechiométrie des fonctions réactives, les nouveaux réticulants permettent d'obtenir des propriétés mécaniques pour des temps de cuisson plus courts. C'est ainsi qu'après 12 minutes des cuisson à 200 °C la formulation témoin A n'est pas réticulée. Par comparaison pour obtenir avec la formulation témoin A des propriétés mécanique équivalentes à celles obtenues en 12 minutes à 200 °C avec la formulation B, il aurait faillu porter le temps de cuisson à 25 minutes à la même température.

c) L'utilisation d'un excès de réticulant (formulations C et D) permet d'obtenir dans le cas des réticulants de l'invention (formulation D) des propriétés mécaniques finales – et notamment de choc – nettement plus élevées que dans la formulation témoin C, toutes choses étant égales par ailleurs.

Exemple 4

On réalise dans les mêmes conditions que dans l'exemple 3, une formulation pour peinture en poudre dont les ingrédients suivants:

— Résine de polyester de
  l'exemple 2                                    100 parties
— Compositions de polyanhydride
  de l'exemple 1-4                               30 parties
— Oxyde de titane                                56 parties
— Acronal 4F                                      2 parties
— Oxyde de zinc                                   1 partie Cette formulation correspond sensiblement à la stoechiométrie des fonctions réactives.

On utilise cette formulation dans les mêmes conditions que dans l'exemple 3 pour obtenir une peinture sur métal dont les caractéristiques suivantes:

Réactivité: dG'/dt                    $3,3\,10^5$
                                       dynes/cm²/mn
— Epaisseur                            60 microns
— Emboutissage (Erichsen)             65 mm
— Résistance au choc                  > kgcm
— Pliage sur mandrin                  $\varnothing$ < 3 mm
— Résistance à la méthyléthylcétone                         > 3 mm

**Revendications**

1. Composition à fonctions anhydride d'acide, caractérisé en ce qu'elle est obtenue par réaction sous chauffage d'anhydride trimellitique avec un mélange d'un plusieurs diols et d'un ou plusieurs polyols de fonctionnalités supérieures à deux, ou avec un ou plusieurs polyols de fonctionnalités supérieures à deux.

2. Composition selon la revendication 1, caractérisé en ce que les diols utilisés sont des diols aliphatiques ou cycloaliphatiques à chaine droite ou ramifiée contenant de deux a dix atomes de carbone.

3. Composition selon la revendication 2, caractérisé en ce que les diols sont choisis parmi l'éthylène glycol, le propylène glycol, le diéthylène glycol, le dipropylène glycol, le néopentylglycol, le cyclohexane diméthanol.

4. Composition selon la revendication 1, caractérisé en ce que les polyols de fonctionnalités supérieures à deux sont choisis parmi le glycérol, le triméthylolpropane, le trhyhydroéthylisocyanurate, le pentaérythritol et le sorbitol.

5. Composition selon l'une quelconque des revendications, précédentes, caractérisés en ce que le rapport molaire diols/polyols de la partie hydroxylée entrant en réaction avec l'anhydride trimellitique est compris entre zéro et cent, de préférence entre zéro et dix.

6. Composition selon l'une quelconque des revendications précédentes, caractérisée en ce que le rapport molaire anhydride trimellitique/diols + polyols ou anhydride trimellitique/polyols est tel que l'on reste dans les limites de la loi de Flory en fonction du degré d'avancement de la réaction et du taux de ramification afin de ne pas aboutir à une gélification.

7. Composition selon la revendication 1, caractérisée en ce qu'elle est préparée à partir d'anhydride trimellitique et de glycérol dans un rapport molaire TMA/glycérol de 3.

8. Composition selon la revendication 7, caractérisée en ce qu'elle présente un indice d'acide en milieu aqueux de 522, un indice d'acide en milieu alcoolique de 328 et un point de fusion bille et anneau de 120 °C.

9. Composition selon la revendication 1, caractérisée en ce qu'elle est préparée à partir de 2 moles d'anhydride trimellitique, 0,7 mole d'éthylène glycol et 0,2 mole de glycérol.

10. Composition selon la revendication 9, caractérisée en ce qu'elle présente un indice d'acide en milieu aqueux de 540, un indice d'acide en milieu alcoolique de 310 et un point de fusion bille et anneau de 84 °C.

11. Composition selon la revendication 1, caractérisée en ce qu'elle est préparée à partir de 3 moles d'anhydride trimellitique et de 1 mole de trihydroxyéthylisocyanurate.

12. Composition selon la revendication 11, caractérisée en ce qu'elle présente un indice d'acide en milieu aqueux de 402, un indice d'acide en milieu alcoolique de 234 et un point de fusion bille et anneau de 140 °C.

13. Composition selon la revendication 1, caractérisée en ce qu'elle est préparée à partir de 2 moles d'anhydride trimellitique, 0,7 mole d'éthylène glycol et 0,15 mole de pentaérythritol.

14. Composition selon la revendication 13, caractérisée en ce qu'elle présente un indice d'acide en milieu aqueux de 553, un indice d'acide en milieu alcoolique de 309 et un point de fusion bille et anneau de 88 °C.

15. Procédé de préparation d'une composition à fonctions anhydride selon l'une quelconque des revendications précédentes, caractérisée en ce que l'on chauffe l'anhydride trimellitique et le mélange de diols et de polyols ou le ou les polyols de fonctionalités supérieures à deux à une température comprise entre 180 et 300 °C, de préférence entre 220 et 280 °C pendant un temps compris entre 4 et 6 heures.

16. Procédé selon la revendication 15, caractérisé en ce que l'eau formée au cours de la réaction est éliminée au moyen d'un gaz d'entrainement, par azéotropic ou par mise sous vide.

17. Composition pour peinture en poudre réticulable à la chaleur, caractérisée en ce qu'elle contient en tant que réticulant une composition à fonctions anhydride d'acide selon l'une quelconque des revendications 1 à 14, et en tant que résine, une ou des résines choisies parmi des résines saturées de polyester à prédominance de fonctions hydroxyle et/ou des résines d'époxyde.

18. Composition pour peinture selon la revendication 17, caractérisé en ce que la résine saturée de polyester résulte de la réaction d'un acide dicarboxylique aromatique et d'un diol et le cas échéant, de polyols et/ou de polyacides de fonctionnalités supérieures à deux.

19. Composition selon la revendication 18, caractérisée en ce que la résine de polyester présente un point de ramollissement bille et anneau de 60 à 130 °C, de préférence de 70 à 100 °C, un indice d'hydroxyle compris entre 100 et 200, et un indice d'acide inférieure à 10, de préférence inférieur à 5.

20. Composition pour peinture en poudre selon la revendication 17, caractérisée en ce que la resine d'époxyde est un produit de condensation d'un diphénol et d'un épihalohydrine, présentant un point de ramollissement bille et anneau compris entre 60 et 130 °C, de préférence entre 80 et 110 °C et un indice d'époxy compris entre 400 et 1500, de préférence entre 500 et 1000.

21. Composition pour peinture en poudre selon l'une quelconque des revendications 17 à 20, caractérisée en ce que le rapport des fonctions anhydride du réticulant aux fonctions réactives de la ou des résines est compris entre 1 et 1,7 de préférence entre 1,1 et 1,5.

22. Composition pour peinture en poudre selon l'une quelconque des revendications 17 à 21, caractérisée en ce qu'elle contient en plus des agents d'étalement, des charges, pigments et colorants et des agents d'accélération de la cuisson.

23. Procédé de préparation d'une peinture en poudre, caractérisé en ce que l'on mélange par fusion la composition à fonctions anhydride, la ou les résines réactives et les adjuvants à une température inférieure à 120 °C, puis en ce que l'on refroidit, broye et tamise.

24. Procédé d'obtention sur un support thermiquement stable d'un feuil de peinture réticulé, caractérisé en ce que l'on chauffe sur ledit support une peinture en poudre selon l'une quelconque des revendications 17 à 22, à une température comprise entre 140 et 280 °C, pendant un temps compris entre 2 et 40 minutes.

**Ansprüche**

1. Zusammensetzung mit Anhydritfunktionen, dadurch gekennzeichnet, dass sie durch Umsetzung von Trimellitsäureanhydrid mit einem Gemisch aus einem oder mehreren Diolen und einem oder mehreren Polyolen mit einer Funktionalität über zwei oder mit einem oder mehreren Polyolen einer Funktionalität über zwei unter Erwärmen hergestellt ist.

2. Zusammensetzung nach Anspruch 1, dadurch gekennzeichnet, dass die verwendeten Diole aliphatische oder cycloaliphatische Diole mit gerader oder verzweigter Kette und 2 bis 10 Kohlenstoffatomen sind.

3. Zusammensetzung nach Anspruch 2, dadurch gekennzeichnet, dass die Diole unter Äthylenglycol, Propylenglycol, Diäthylenglycol, Dipropylenglycol, Neopentylglycol und Cyclohexandimethanol gewählt sind.

4. Zusammensetzung nach Anspruch 1, dadurch gekennzeichnet, dass die Polyole der Funktionalität über zwei unter Glycerin, Trimethylolpropan, Trihydroxyäthylisocyanurat, Pentaerythrit und Sorbit ausgewählt sind.

5. Zusammensetzung nach irgendeinem der vorangehenden Ansprüche, dadurch gekennzeichnet, dass das Molverhältnis Diol/Polyol des hydroxylierten Anteils, der die Reaktion mit dem Trimellitsäureanhydrid eingeht, zwischen 0 und 100, vorzugsweise zwischen 0 und 10 liegt.

6. Zusammensetzung nach irgendeinem der vorangehenden Ansprüche, dadurch gekennzeichnet, dass das Molverhältnis Trimellitsäureanhydrid/ Diolen + Polyolen oder von Trimellitsäureanhydrid/Polyolen derart ist, dass man unter Berücksichtigung des Umsetzungsgrades und des Verzweigungsgrades innerhalb der Grenzen des Gesetzes von Flory bleibt, damit es nicht zu einer Gelierung kommt.

7. Zusammensetzung nach Anspruch 1, dadurch gekennzeichnet, dass sie aus Trimellitsäureanhydrid und Glycerin in einem Molverhältnis TMA/Glycerin von 3 hergestellt ist.

8. Zusammensetzung nach Anspruch 7, dadurch gekennzeichnet, dass sie in wässrigem Milieu eine Säurezahl von 522, in alkoholischem Milieu eine eine Säurezahl von 328, und einem Schmelzpunkt (Kugel und Ring) von 120 °C besitzt.

9. Zusammensetzung nach Anspruch 1, dadurch gekennzeichnet, dass sie aus 2 Mol Trimellitsäureanhydrid, 0,7 Mol Äthylenglycol und 0,2 Mol Glycerin hergestellt ist.

10. Zusammensetzung nach Anspruch 9, dadurch gekennzeichnet, dass sie in wässrigem Milieu eine Säurezahl von 540, in alkoholischem Milieu eine Säurezahl von 310 und einem Schmelzpunkt (Kugel und Ring) von 84 °C besitzt.

11. Zusammensetzung nach Anspruch 1, dadurch gekennzeichnet, dass sie aus 3 Molen Trimellitsäureanhydrid und 1 Mol Trihydroxyäthylisocyanurat hergestellt ist.

12. Zusammensetzung nach Anspruch 11, dadurch gekennzeichnet, dass sie in wässrigem Milieu eine Säurezahl von 402, in alkoholischem Milieu eine Säurezahl von 234, und einem Schmelzpunkt (Kugel und Ring) von 140 °C besitzt.

13. Zusammensetzung nach Anspruch 1, dadurch gekennzeichnet, dass sie aus 2 Molen Trimellitsäureanhydrid, 0,7 Mol Äthylenglycol und 0,15 Mol Pentaerythrid hergestellt ist.

14. Zusammensetzung nach Anspruch 13, dadurch gekennzeichnet, dass sie in wässrigem Milieu eine Säurezahl von 553, in alkoholischem Milieu eine Säurezahl von 309, und einem Schmelzpunkt (Kugel und Ring) von 88 °C besitzt.

15. Verfahren zur Herstellung einer Zusammensetzung mit Anhydridfunktionen gemäss irgendeinem der vorangehenden Ansprüche, dadurch gekennzeichnet, dass man Trimellitsäureanhydrid und das Gemisch aus Diolen und Polyolen oder der Polyole mit einer Funktionalität über zwei bei einer Temperatur zwischen 180 und 300 °C, vorzugsweise zwischen 220 und 280 °C während einer Zeit von 4 bis 6 Stunden erhitzt.

16. Verfahren nach Anspruch 15, dadurch gekennzeichnet, dass das im Laufe der Reaktion gebildete Wasser mit Hilfe eines Schleppgases, azeotropisch oder unter Vakuum entfernt wird.

17. Zusammensetzung für in der Wärme vernetzbare Pulverfarbe, dadurch gekennzeichnet, dass sie als Vernetzungsmittel eine Zusammensetzung mit Säureanhydridfunktionen gemäss irgendeinem der Ansprüche 1 bis 14 besitzt und als Harz eines oder mehrere Harze enthält, die unter den gesättigten Polyestern mit überwiegender Hydroylfunktion und/oder den Epoxyharzen ausgewählt sind.

18. Farbzusammensetzung nach Anspruch 17, dadurch gekennzeichnet, dass das gesättigte Polyesterharz der Umsetzung einer aromatischen Dicarbonsäure und einem Diol oder gegebenenfalls von Polyolen und/oder Polysäuren mit einer Funktionalität über 2 entstammt.

19. Zusammensetzung nach Anspruch 18, dadurch gekennzeichnet, dass das Polyesterharz einen Erweichungspunkt (Kugel und Ring) von 60 bis 130 °C, vorzugsweise 70 bis 100 °C, eine Hydroxylzahl zwischen 100 und 200, und eine Säurezahl unter 10, vorzugsweise unter 5 besitzt.

20. Zusammensetzung für Pulverfarben nach Anspruch 17, dadurch gekennzeichnet, dass das Epoxyharz ein Kondensationsprodukt eines Diphenols und eines Epihalogenhydrins mit einem Erweichungspunkt (Kugel und Ring) zwischen 60 und 130 °C, vorzugsweise zwischen 80 und 110 °C und einem Epoxidinex zwischen 400 und 1500, vorzugsweise zwischen 500 und 1000 besitzt.

21. Zusammensetzung für Pulverfarben nach irgendeinem der Ansprüche 17 bis 20, dadurch gekennzeichnet, dass das Verhältnis der Anhydridfunktionen des Vernetzers zu den reaktionsfähigen Gruppen des oder der Harze 1 bis 1,7 vorzugsweise 1,1 bis 1,5 beträgt.

22. Zusammensetzung für Pulverfarben nach irgendeinem der Ansprüche 17 bis 21, dadurch gekennzeichnet, dass sie zusätzliche Verteilungsmittel, Füllstoffe, Pigmente und Farbstoffe und Härtungsbeschleuniger enthält.

23. Verfahren zur Herstellung einer Pulverfarbe, dadurch gekennzeichnet, dass man durch Schmelzen die Zusammensetzung mit Anhydridfunktionen, das oder die reaktionsfähigen Harze und die Zusätze bei einer Temperatur unter 120 °C mischt, anschliessend abkühlt, zermahlt und siebt.

24. Verfahren zur Herstellung eines vernetzten Farbfilms auf einem thermisch stabilen Träger, dadurch gekennzeichnet, dass man auf dem genannten Träger eine Pulverfarbe nach irgendeinem der Ansprüche 17 bis 22 für die Dauer von 2 bis 40 Minuten auf eine Temperatur zwischen 140 und 280 °C erhitzt.

**Claims**

1. Composition containing acid anhydride groups, characterised in that it is obtained by reacting trimellitic anhydride, under the action of heat, with a mixture of one or more diols and of one or more polyols containing more than two functional groups, or with one or more polyols containing more than two functional groups.

2. Composition according to Claim 1, characterised in that the diols used are aliphatic or cycloaliphatic diols with a straight or branched chain containing from 2 to 10 carbon atoms.

3. Composition according to Claim 2, characterised in that the diols are chosen from amongst ethylene glycol, propyleneglycol, diethylene glycol, dipropylene glycol, neopentylglycol and cyclohexanedimethanol.

4. Composition according to Claim 1, characterised in that the polyols containing more than two functional groups are chosen from amongst glycerol, trimethylolpropane, trihydroxyethyl isocyanurate, pentaerythritol and sorbitol.

5. Composition according to any one of the preceding claims, characterised in that te molar ratio of diols/polyols in the hydroxylated part reacting with the trimellitic anhydride is between 0 and 100, preferably between 0 and 10.

6. Composition according to any one of the preceding claims, characterised in that the molar ratio of trimellitic anhydride/diols + polyols or of trimellitic anhydride/polyols is such as to remain within the limits of Flory's law, according to the degree of completion of the reaction and the degree of branching, in order not to result in gelling.

7. Composition according to Claim 1, characterised in that it is prepared from trimellitic anhydride and glycerol in a molar ratio of TMA/glycerol of 3.

8. Composition according to Claim 7, characterised in that it has en acid value of 522 in an aqueous medium, an acid value of 328 in an alcoholic medium and a ball-and-ring melting point of 120 °C.

9. Composition according to Claim 1, characterised in that it is prepared from 2 mol of trimellitic anhydride, 0.7 mol of ethylene glycol and 0.2 mol of glycerol.

10. Composition according to Claim 9, characterised in that it has an acid value of 540 in an aqueous medium, an acid value of 310 in an alcoholic medium and a ball-and-ring melting point of 84 °C.

11. Composition according to Claim 1, characterised in that it is prepared from 3 mol of trimellitic anhydride and 1 mol of trihydroxyethyl isocyanurate.

12. Composition according to Claim 11, characterised in that it has an acid value of 402 in an aqueous medium, an acid value of 234 in an alcoholic medium and a ball-and-ring melting point of 140 °C.

13. Composition according to Claim 1, characterised in that it is prepared from 2 mol of trimellitic anhydride, 0.7 mol of ethylene glycol and 0.15 mol of pentaerythritol.

14. Composition according to Claim 13, characterised in that it has an acid value of 553 in an aqueous medium, an acid value of 309 in an alcoholic medium and a ball-and-ring melting point of 88 °C.

15. Process for the preparation of a composition containing anhydride groups, according to any one of the preceding claims, characterised in that the trimellitic anhydride and the mixture of diols and polyols, or the polyol or polyols containing more than two functional groups, are heated at a temperature of between 180 and 300 °C, preferably of between 220 and 280 °C, for a period of between 4 and 6 hours.

16. Process according to Claim 15, characterised in that the water formed during the reaction is removed by means of an entraining gas, by azeotropic distillation or by application of a vacuum.

17. Powdered paint composition which can be crosslinked by heat, characterised in that it contains, as the crosslinking agend, a composition containing acid anhydrie groups, according to any one of Claims 1 to 14, and as the resin, one or more resins chosen from amongst saturated polyester resins containing a predominance of hydroxyl groups and/or epoxide resins.

18. Paint compositions according to Claim 17, characterised in that the saturated polyester resin results from the reaction of an aromatic dicarboxylic acid with a diol and, if appropriate, with polyols and/or polyacid containing more than two functional groups.

19. Composition according to Claim 18, characterised in that the polyester resin has a ball-and-ring softening point of 60 to 130 °C, preferably of 70 to 100 °C, and a hydroxyl value of between 100 and 200 and an acid value of less than 10, preferably of less than 5.

20. Powdered paint composition according to Claim 17, characterised in that the epoxide resin is a condensation product of a diphenol and an epihalogenohydrin, having a ball-and-ring softening point of between 60 and 130 °C, preferably of between 80 and 110 °C, and an epoxy value of between 400 and 1,500, preferably of between 500 and 1,000.

21. Powdered paint composition according to any one of Claims 17 to 20, characterised in that the ratio of the anhydride groups in the crosslinking agent to the reactive groups in the resin or resins is between 1 and 1.7, preferably between 1.1 and 1.5.

22. Powdered paint composition according to any one of Claims 17 to 21, characterised in that it also contains spreading agents, fillers, pigments and dyestuffs, and baking accelerators.

23. Process for the preparation of a powdered paint, characterised in that the composition containing anhydride groups, the reactive resin or resins and the adjuvants are mixed in the melt at a temperature below 120 °C, and in that the mixture is then cooled, ground and sieved.

24. Process for the preparation of a crosslinked paint film on a thermally stable substrate, characterised in that a powdered paint according to any one of Claims 17 to 22 is heated, on the said substrate, at a temperature of between 140 and 280 °C for a period of between 2 and 40 minutes.